# EUROPEAN PATENT APPLICATION

(11) **EP 4 737 375 A1**
(43) Date of publication of application: **06.05.2026**
(21) Application number: 25210850.1
(22) Date of filing: 23.10.2025
(51) Int. Cl.: B66B 7/12, B66B 7/06

(54) **RESISTANCE-BASED INSPECTION OF ELEVATOR SYSTEM SUPPORT MEMBERS**

(30) Priority: 30.10.2024 US 202418932063
(71) Applicant: Otis Elevator Company, Farmington, Connecticut 06032 (US)
(72) Inventor: Torlai, David R., Farmington, 06032 (US); Gao, Yingxin, Farmington, 06032 (US); Martin, Kyle B., Farmington, 06032 (US); Shaw, George, Farmington, 06032 (US)
(74) Representative: Schmitt-Nilson Schraud Waibel Wohlfrom Patentanwälte Partnerschaft mbB

(57) **Abstract**

A monitoring system for a belt supportive of an elevator car of an elevator system includes a monitoring unit, and one or more connectors configured to connect the monitoring unit to one or more tension members of the belt. A connector of the one or more connectors is configured to connect to the one or more tension members at a longitudinal end of the one or more tension members. The monitoring system is configured to measure an electrical resistance of the one or more tension members.

## Description

Exemplary embodiments generally relates to monitoring systems and methods, and more particularly, to systems and methods for monitoring the condition of a support structure, for example a belt used in an elevator system.

Tensile support structures, such as coated steel belts containing metal cords, are used to move an elevator car up and down within an elevator shaft or hoistway. Because the condition of the tensile support structure is critical to the safety of the operation of the elevator, there is a need to determine the remaining strength level of the tensile support and detect if the remaining strength level falls below a minimum threshold. One such method of determining the remaining strength level is via resistance-based inspection, where an electrical resistance of one or more cords of the belt is monitored, with a change in electrical resistance indicative of a reduction in remaining strength of the cord, and the belt.

Resistance-based inspection requires connection of a measurement device to the one or more cords, which is typically accomplished through holes formed in a traction side or bask side of the belt. Because of the increased overall thickness of the belt when such devices are installed to the belt, the belt having the measurement device installed cannot be installed through a termination at the installation site of the belt. Thus, the belt must be installed in the hoistway and the system termination, then the measurement device can be installed.

Some electrical characteristics, such as electrical resistance or impedance, of the cables, cords or tension members in the support structure will vary as the cross-sectional areas of the tension members decrease. Accordingly, it is possible to determine the remaining support strength of the support structure based on the electrical characteristics of the tension members thereof. There currently are some monitoring systems which employ a resistance-based inspection scheme to monitor the resistance of support structures, and thus, the remaining strength thereof. In such systems, a measured electrical resistance is compared to a predetermined resistance threshold such that if the resistance threshold is exceeded, the belt is evaluated for potential repair or replacement. The resistance threshold is determined taking selected factors into account, including an expected elevator system traffic pattern,

In one exemplary embodiment, a monitoring system for a belt supportive of an elevator car of an elevator system includes a monitoring unit, and one or more connectors configured to connect the monitoring unit to one or more tension members of the belt. A connector of the one or more connectors is configured to connect to the one or more tension members at a longitudinal end of the one or more tension members. The monitoring system is configured to measure an electrical resistance of the one or more tension members.

Particular embodiments further may include at least one, or a plurality of, the following optional features, alone or in combination with each other:

Additionally or alternatively, in this or other embodiments the one or more connectors includes one or more electrically conductive pins electrically connected to the one or more tension members.

Additionally or alternatively, in this or other embodiments the one or more electrically conductive pins are inserted into the one or more tension members.

Additionally or alternatively, in this or other embodiments the one or more connectors includes an electrically conductive material at a longitudinal end of the belt.

Additionally or alternatively, in this or other embodiments the electrically conductive material includes an electrically conductive fixture or an electrically conducting material positioned on an external surface of a fixture. The electrically conductive material is electrically connected to the one or more tension elements.

Additionally or alternatively, in this or other embodiments a protective sleeve positioned over a connector of the one or more connectors.

Additionally or alternatively, in this or other embodiments the one or more connectors includes a first connector positioned at a first longitudinal end of the belt, and a second connector positioned at a second longitudinal end of the belt.

In another exemplary embodiment, a belt and monitoring system of an elevator system includes a belt including one or more tension members extending longitudinally along a belt length of the belt, and a jacket at least partially enveloping the one or more tension members. A monitoring system is operably connected to the one or more tension members. The monitoring system includes a monitoring unit, and one or more connectors configured to connect the monitoring unit to the one or more tension members. A connector of the one or more connectors connects to the one or more tension members at a longitudinal end of the one or more tension members.

Particular embodiments further may include at least one, or a plurality of, the following optional features, alone or in combination with each other:

Additionally or alternatively, in this or other embodiments the one or more connectors includes one or more electrically conductive pins electrically connected to the one or more tension members.

Additionally or alternatively, in this or other embodiments the one or more electrically conductive pins are inserted into the one or more tension members.

Additionally or alternatively, in this or other embodiments the one or more connectors includes an electrically conductive fixture or an electrically conducting material positioned on an external surface of a fixture. The electrically conductive fixture or the electrically conductive material is electrically connected to the one or more tension elements.

Additionally or alternatively, in this or other embodiments a protective sleeve is positioned over a connector of the one or more connectors.

Additionally or alternatively, in this or other embodiments the one or more connectors includes a first connector positioned at a first longitudinal end of the belt, and a second connector positioned at a second longitudinal end of the belt.

Additionally or alternatively, in this or other embodiments the monitoring system is configured to measure an electrical resistance of the one or more tension members.

In yet another exemplary embodiment, an elevator system includes an elevator car and a belt operably connected to the elevator car and configured to move the elevator car along a hoistway of the elevator system. The belt includes one or more tension members extending longitudinally along a belt length of the belt, and a jacket at least partially enveloping the one or more tension members. A monitoring system is operably connected to the one or more tension members. The monitoring system includes a monitoring unit, and one or more connectors configured to connect the monitoring unit to the one or more tension members. A connector of the one or more connectors connects to the one or more tension members at a longitudinal end of the one or more tension members.

Particular embodiments further may include at least one, or a plurality of, the following optional features, alone or in combination with each other:

Additionally or alternatively, in this or other embodiments the one or more connectors includes one or more electrically conductive pins electrically connected to the one or more tension members.

Additionally or alternatively, in this or other embodiments the one or more electrically conductive pins are inserted into the one or more tension members.

Additionally or alternatively, in this or other embodiments the one or more connectors includes an electrically conductive fixture or an electrically conducting material positioned on an external surface of a fixture. The electrically conductive material is electrically connected to the one or more tension elements.

Additionally or alternatively, in this or other embodiments the one or more connectors includes a first connector positioned at a first longitudinal end of the belt, and a second connector positioned at a second longitudinal end of the belt.

Additionally or alternatively, in this or other embodiments the monitoring system is configured to measure an electrical resistance of the one or more tension members.

The following descriptions should not be considered limiting in any way. With reference to the accompanying drawings, like elements are numbered alike:
FIG. 1 is a schematic view of an embodiment of an elevator system;
FIG. 2 is an end view of a belt for an elevator system;
FIG. 3 is a cross-sectional view of an embodiment of a tension element of a belt;
FIG. 4 is a schematic illustration of an embodiment of a monitoring system operably connected to a belt;
FIG. 5 is a schematic illustration of another embodiment of a monitoring system operably connected to a belt;
FIG. 6 is an illustration of a pin utilized in securing a monitoring system to a belt; and
FIG. 7 is a method of forming and installing a belt to an elevator system.

A detailed description of one or more embodiments of the disclosed apparatus and method are presented herein by way of exemplification and not limitation with reference to the Figures.

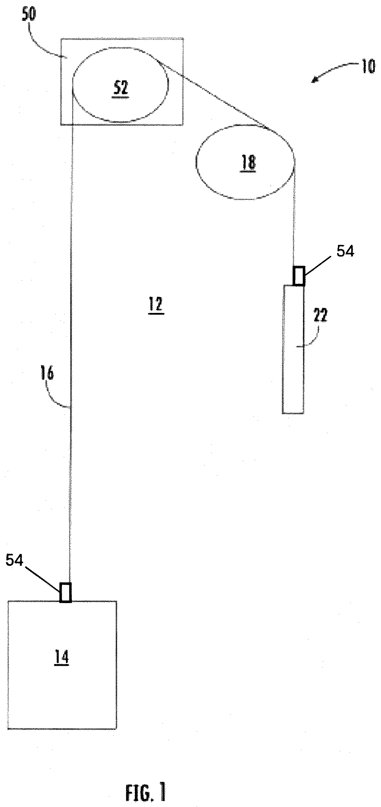

Referring now to FIG. 1, an elevator system 10 is shown in schematic fashion. It is to be understood that the version of the elevator system 10 shown in FIG. 1 is for illustrative purposes only and to present background for the various components of a general elevator system.

Shown in FIG. 1 is a schematic view of an exemplary traction elevator system 10. Features of the elevator system 10 that are not required for an understanding of the present invention (such as the guide rails, safeties, *etc.*) are not discussed herein. The elevator system 10 includes an elevator car 14 operatively suspended and/or propelled in a hoistway 12 with one or more tension members, for example belts 16. While in the following description, belts 16 are the tension members utilized in the elevator system, one skilled in the art will readily appreciate that the present disclosure may be utilized with other tension members, such as ropes or braided tapes. The one or more belts 16 interact with sheaves 18 and 52 to be routed around various components of the elevator system 10. Sheave 18 is configured as a diverter, deflector or idler sheave and sheave 52 is configured as a traction sheave, driven by a machine 50. Movement of the traction sheave 52 by the machine 50 drives, moves and/or propels (through traction) the one or more belts 16 that are routed around the traction sheave 52. Diverter, deflector or idler sheaves 18 are not driven by a machine 50, but help guide the one or more belts 16 around the various components of the elevator system 10. The one or more belts 16 could also be connected to a counterweight 22, which is used to help balance the elevator system 10 and reduce the difference in belt tension on both sides of the traction sheave during operation. The sheaves 18 and 52 each have a diameter, which may be the same or different from each other. The belts 16 are installed to terminations 54 at their ends to secure the belts 16 to, for example, the elevator car 14 and the counterweight 22.

In some embodiments, the elevator system 10 could use two or more belts 16 for suspending and/or driving the elevator car 14. In addition, the elevator system 10 could have various configurations such that either both sides of the one or more belts 16 engage the sheaves 18, 52 or only one side of the one or more belts 16 engages the sheaves 18, 52. The embodiment of FIG 1 shows a 1:1 roping arrangement in which the one or more belts 16 terminate at the elevator car 14 and counterweight 22, while other embodiments may utilize other roping arrangements.

The belts 16 are constructed to meet belt life requirements and have smooth operation, while being sufficiently strong to be capable of meeting strength requirements for suspending and/or driving the elevator car 14 and counterweight 22.

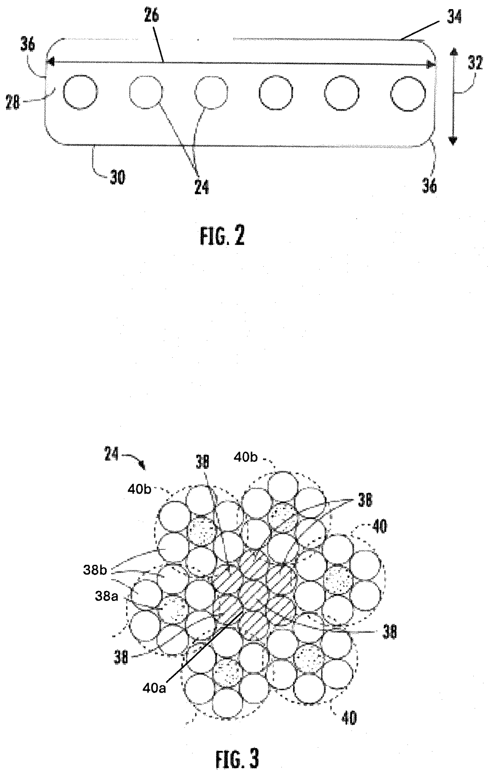

FIG. 2 provides a cross-sectional schematic of an exemplary belt 16 construction or design. The belt 16 includes a plurality of tension elements 24 extending longitudinally along the belt 16 and arranged across a belt width 26. The tension elements 24 are at least partially enclosed in a jacket 28 to restrain movement of the tension elements 24 in the belt 16 with respect to each other and to protect the tension elements 24. The jacket 28 defines a traction side 30 configured to interact with a corresponding surface of the traction sheave 52. A primary function of the jacket 28 is to provide a sufficient coefficient of friction between the belt 16 and the traction sheave 52 to produce a desired amount of traction there between. The jacket 28 should also transmit the traction loads to the tension elements 24. In addition, the jacket 28 should be wear resistant, fatigue resistant and protect the tension elements 24 from impact damage, exposure to environmental factors, such as chemicals, for example.

Exemplary materials for the jacket 28 include the elastomers of thermoplastic and thermosetting polyurethanes, thermoplastic polyester elastomers, ethylene propylene diene elastomer, chloroprene, chlorosulfonyl polyethylene, ethylene vinyl acetate, polyamide, polypropylene, butyl rubber, acrylonitrile butadiene rubber, styrene butadiene rubber, acrylic elastomer, fluoroelastomer, silicone elastomer, polyolefin elastomer, styrene block and diene elastomer, natural rubber, or combinations thereof. Other materials may be used to form the jacket material 28 if they are adequate to meet the required functions of the belt 16.

The belt 16 has a belt width 26 and a belt thickness 32, with an aspect ratio of belt width 26 to belt thickness 32 greater than one. The belt 16 further includes a back side 34 opposite the traction side 30 and belt edges 36 extending between the traction side 30 and the back side 34. While six tension elements 24 are illustrated in the embodiment of FIG. 2, other embodiments may include other numbers of tension elements 24, for example, 4, 10 or 12 tension elements 24. Further, while the tension elements 24 of the embodiment of FIG. 2 are substantially identical, in other embodiments, the tension elements 24 may differ from one another. While a belt 16 with a rectangular cross-section is illustrated in FIG. 2, it is to be appreciated that belts 16 having other cross-sectional shapes are contemplated within the scope of the present disclosure.

Referring now to FIG. 3, the tension element 24, also referred to as a cord, may be a plurality of wires 38, for example, steel wires 38, which in some embodiments are formed into one or more strands 40. The strands 40 are groups of wires 38 that are arranged, in some embodiments, by twisting or the like. An exemplary strand 40 may include a central wire 38a and a plurality of outer wires 38b arranged around the central wire 38a. In some embodiments the wires 38a and 38b are the same size and formed of the same material, while in other embodiments the wires 38a and 38b may vary in cross-sectional shape or size and/or vary in material composition. For example, the central wire 38a may be formed from a first material and has a first cross-sectional shape, and the outer wires 38b may be formed from a second material different from the first material, and/or the outer wires 38b may have a second cross-sectional shape different from the first cross-sectional shape.

The strands 40 are grouped or arranged to form a tension element 24. In some embodiments, the tension element 24 includes one or more central strands 40a with a plurality of outer strands 40b arranged around the central strands 40a. In some embodiments, the outer strands 40b are wrapped around the central strands 40a. While in some embodiments, the central strands 40a have the same configuration as each of the outer strands 40b, in other embodiments, the outer strands 40b and the central strands 40a may vary in, for example, wire 38 quantity, wire 38 cross-sectional size or shape, or wire 38 material composition.

While a circular cross-sectional tension element geometry is illustrated in the embodiment of FIG 3, other embodiments may include different tension element cross-sectional geometries, such as rectangular or ellipsoidal. While the cross-sectional geometries of the tension elements 24 in FIG. 2 are shown as identical, in other embodiment the tension elements' cross-sectional geometries may differ from one another.

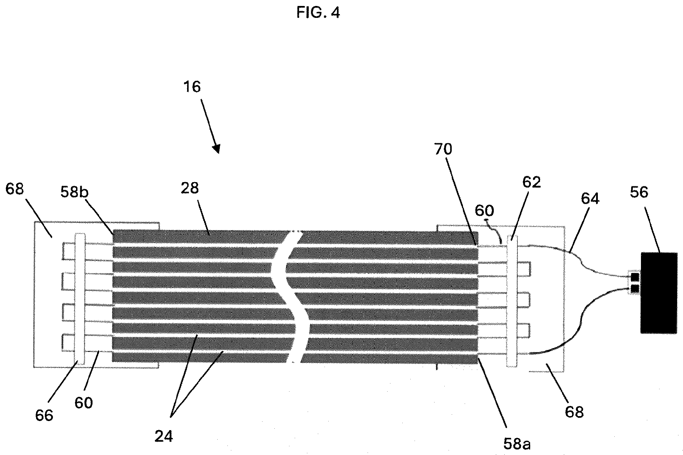

Referring now to FIG. 4, the belt 16 is monitored for wear and/or structural integrity with a resistance-based inspection (RBI) device 56 connected to the belt 16. The RBI device 56 is connected to the belt 16 at each longitudinal belt end 58. In particular, at a first belt end 58a conductive pins 60 from an RBI side connector 62 are inserted into the tension elements 24 at the first end 58a, specifically at first longitudinal ends 70 of the tension elements 24, and two electrical leads 64 from the RBI side connector 62 are installed into the RBI device 56. A shorting side connecter 66 is connected to the second longitudinal ends 72 of the tension elements 24 at a second belt end 58b. The shorting side connector 66 completes the circuit with the RBI device 56 allowing for evaluating electrical resistance of the belt 16 by directing electrical current through the tension elements 24. While in the illustrated embodiment, the RBI device 56 is connected to all of the tension elements 24, it is to be appreciated that in some embodiments the RBI device 56 is connected to only some of the tension elements 24.

The RBI side connector 62 and the shorting side connector 66, are low profile compared to the belt thickness 32, so that the belt 16 can be installed into the terminations 54 with the RBI side connector 62 and the shorting side connector 66 in place. In some embodiments, after the RBI side connector 62 and the shorting side connector 66 are installed, a protective sleeve, shown schematically at 68 is installed over each of the RBI side connector 62 and the shorting side connector 66 to protect the connections to the belt 16 during handling, transportation and installation of the belt 16 in the hoistway 12. The protection sleeve 68 is formed from, for example, a plastic material that may be shrunk-fit to the belt 16, covering the shorting side connector 66 and the RBI side connector 62.

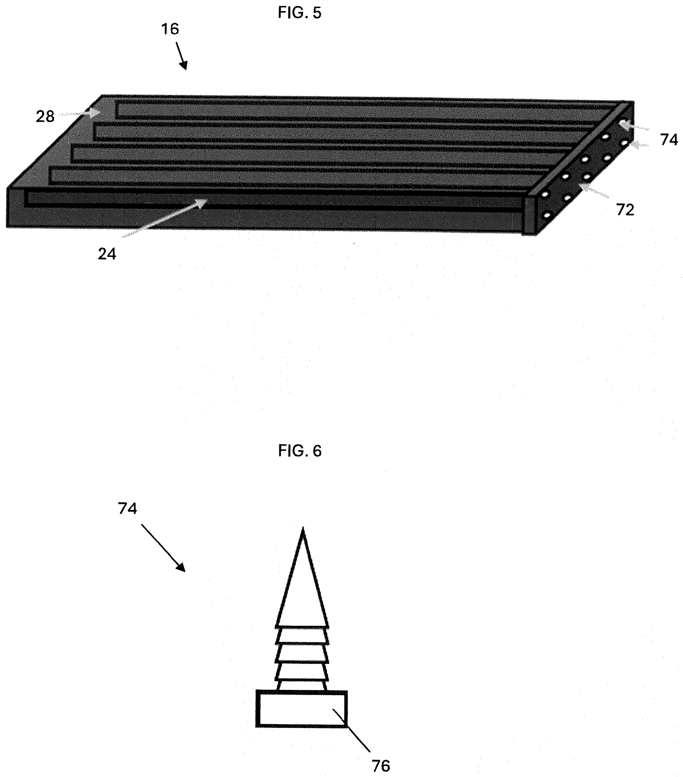

Another embodiment of an RBI side connector 62 is illustrated in FIG. 5. In this embodiment, the RBI side connector 62 includes a fixture 72, which in some embodiments is configured as a plate. According to an aspect, the fixture 72 is formed from an electrically conductive material. It is contemplated that an electrically conductive material may be adhered to, coated on, or otherwise deposited on an external surface of the fixture 72. The fixture 72 is installed to the first belt end 58a and retained there by a plurality of retention pins 74, and example of which is shown in FIG. 6, that are inserted from the fixture 72 and into the jacket 28 in the longitudinal direction at the first belt end 58a. While in the embodiment illustrated, the fixture 72 is formed from conductive material to electrically connect adjacent tension elements 24, in other embodiments the retention pins 74 may formed from or at least partially covered or coated with a conductive material and have oversized pin heads 76 to span adjacent tension elements 24 to thereby electrically connect the adjacent tension elements 24. While the RBI side connector 62 is illustrated in FIG. 5, one skilled in the art will readily appreciate that such a configuration may be similarly utilized as the shorting side connector 66. With its low profile relative to the belt thickness 32, this embodiment can likewise be installed to the belt 16 prior to installing the belt 16 into the terminations 54.

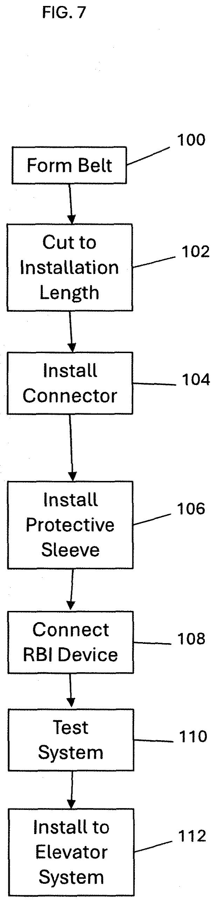

Referring now to FIG.7, illustrated is a method of making and installing a belt 16. At step 100, the belt 16 is formed by enclosing a plurality of tension elements 24 in a jacket 28. The belt 16 is cut to an installation length based on the hoistway 14 and elevator system 10 into which the belt 16 is to be installed at step 102. At step 104, the RBI side connector 62 and the shorting side connector 66 are installed to the belt 16. At step 106, the protective sleeves 68 are installed, and the RBI device 56 is then connected to the RBI side connector 62 at step 108. After connection of the RBI device 56, the system is tested for proper function at step 110. After system testing, the belt 16 may be installed to the elevator system 10 at step 112, and in particular to the terminations 54 with the RBI side connector 62 and the shorting side connector 66 installed to the belt 16.

Use of the connector configurations disclosed herein allows for the RBI device 56 and components to be installed at the manufacturing facility of the belt 16, prior to installation of the belt 16 to the elevator system 10. This improves installation efficiency and repeatability, and also for testing of the system prior to installation in the hoistway 14.

The term "about" is intended to include the degree of error associated with measurement of the particular quantity based upon the equipment available at the time of filing the application.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A monitoring system for a belt supportive of an elevator car of an elevator system, comprising:
a monitoring unit; and
one or more connectors configured to connect the monitoring unit to one or more tension members of the belt, a connector of the one or more connectors configured to connect to the one or more tension members at a longitudinal end of the one or more tension members.

2. The monitoring system of claim 1, wherein the monitoring system is configured to measure an electrical resistance of the one or more tension members.

3. The monitoring system of claim 1 or 2, wherein the one or more connectors includes one or more electrically conductive pins electrically connected to the one or more tension members.

4. The monitoring system of any of claims 1 to 3, wherein the one or more electrically conductive pins are inserted into the one or more tension members.

5. The monitoring system of any of claims 1 to 4, wherein the one or more connectors includes an electrically conductive material at a longitudinal end of the belt.

6. The monitoring system of claim 5, wherein the electrically conductive material includes an electrically conductive fixture or an electrically conducting material disposed on an external surface of a fixture, the electrically conductive material being electrically connected to the one or more tension elements.

7. The monitoring system of any of claims 1 to 6, further comprising a protective sleeve disposed over a connector of the one or more connectors.

8. The monitoring system of any of claims 1 to 7, wherein the one or more connectors includes:
a first connector disposed at a first longitudinal end of the belt; and
a second connector disposed at a second longitudinal end of the belt.

9. A combination of a belt and a monitoring system of an elevator system, comprising:
a belt including:
one or more tension members extending longitudinally along a belt length of the belt; and
a jacket at least partially enveloping the one or more tension members;
a monitoring system according to any of claims 1 to 8, the monitoring system operably connected to the one or more tension members.

10. An elevator system, comprising:
an elevator car;
a belt operably connected to the elevator car and configured to move the elevator car along a hoistway of the elevator system, the belt including:
one or more tension members extending longitudinally along a belt length of the belt; and
a jacket at least partially enveloping the one or more tension members;
the monitoring system according to any of claims 1 to 8, the monitoring system operably connected to the one or more tension members.
